# EUROPÄISCHE PATENTSCHRIFT

(11) **EP 1 502 851 B1**
(45) Veröffentlichungstag und Bekanntmachung des Hinweises auf die Patenterteilung: **24.11.2010**
(21) Anmeldenummer: 03719272.1
(22) Anmeldetag: 14.04.2003
(51) Int. Cl.: B64C 11/46, B64C 27/08

(54) **AERODYNAMISCHE HUB-SCHUB-ANTRIEBSVORRICHTUNG**
AERODYNAMIC LIFTING-THRUSTING PROPULSION DEVICE
PROPULSEUR AERODYNAMIQUE A POUSSEE VERTICALE

(30) Priorität: 16.04.2002 RU 2002109755
(43) Veröffentlichungstag der Anmeldung: 02.02.2005
(73) Patentinhaber: Obschestvo s Ogranichennoi Otvetstvennostyu Midera-k, Moscow, 123053 (RU)
(72) Erfinder: AKARO, Andrey Igorevich, Moscow, 105037 (RU); DENISOV, Anatoly Alekseevich, St.Petersburg, 191002 (RU); ZELINSKY, Anatoly Mikhailovich, St.Petersburg, 197374 (RU); MEDVEDEV, Mikhail Mikhailovich, Zhukovsky, Moskovskaya obl., 140186 (RU)
(74) Vertreter: Jeck, Anton
(86) Internationale Anmeldenummer: PCT/RU2003/000156
(87) Internationale Veröffentlichungsnummer: WO 2003/086857

(56) Entgegenhaltungen:
- RU-A1- 94 026 132
- RU-C1- 2 058 251
- US-A- 1 981 442
- US-A- 2 589 826
- US-A- 3 721 403
- US-A- 3 762 669
- DMITRIEV I.S. ET AL.: 'Sistemy upravleniya odnovintovykh vertoletov' M. MAASHINOSTROENIE 1969, Seiten 53 - 54, XP008095238

## Beschreibung

Die Erfindung bezieht sich auf die Aerodynamik von Fluggeräten, genauer auf ein aerodynamisches Hub- und Zugvortriebsaggregat, das an einem Fluggerät zur Erzeugung der Auftriebs- und der Zugvortriebskraft installiert ist.

Ein solches Aggregat ist aus US 3,721,403 bekannt, welche den nächstliegenden Stand der Technik darstellt und den Oberbegriff des Anspruchs 1 offenbart. Zudem ist ein Hauptdrehflügel eines Hubschraubers bekannt, der eine Auftriebskraft und eine Zugvortriebskraft erzeugt (A.M. Volodenko "Hubschrauber, Arbeiter und Kämpfer", M. Verlag DOSAAF, S.82).

Weiterhin sind Flugschaufeln des Hauptdrehflügels eines Hubschraubers bekannt, die bei ihrer Drehung die Auftriebs- und Zugkraft beim Flug des Hubschraubers erzeugen (W. Jonson "Theorie des Hubschraubers", Buch 1, M., Verlag "Mir", 1983, S. 17).

Der Nachteil der bekannten Hauptdrehflügel des Hubschraubers ist der niedrige Wirkungsgrad bei der Erzeugung der Auftriebskraft. Daher ist eine beträchtliche Leistung nötig, um akzeptable Werte der Auftriebskraft zu erreichen. Beim Drehen der Schaufeln der Hauptdrehflügel hat der Querschnitt der Schaufeln eine unterschiedliche Geschwindigkeit gegen die Luft zur Folge, die umso geringer ist, je kleiner die Radien der Umkreise sind, die von diesen Querschnitten beschrieben werden. Im Ergebnis erweist sich die Oberflächenverteilung der Luftkräfte auf den Schaufeln als nicht gleichmäßig (nahe der quadratischen), wodurch der Wirkungsgrad bei der Erzeugung der Auftriebskraft wesentlich vermindert wird.

Der Erfindung liegt die Aufgabe zugrunde, ein aerodynamisches Hub- und Zugvortriebsaggregat zu schaffen, bei dem eine gleichmäßigere Verteilung der Luftkräfte auf den aerodynamischen Oberflächen von Drehflügeln erreicht wird, die zu einem hohen Wirkungsgrad bei der Erzeugung sowohl der Auftriebskraft als auch der horizontalen Zugvortriebskraft führt. Diese Aufgabe wird durch die technischen Merkmale des Anspruchs 1 gelöst. Insbesondere dadurch, dass das aerodynamische Hub- und Zugvortriebsaggregat einen Rahmen mit einer Achse umfasst, um die sich der Rahmen dreht, dass auf diesem Rahmen mindestens zwei mit aerodynamischen Oberflächen versehene Drehflügel drehbar angeordnet sind, dass jeder Drehflügel an einem Kardangelenk befestigt ist und synchron mit der Drehung des Rahmens schwingen kann, dass das Kardangelenk an einem Schaft befestigt ist, der auf dem Rahmen angeordnet ist, dass die Achsen eines Kreuzstücks des Kardangelenks zueinander senkrecht stehen und sich jeweils in zwei senkrecht zueinander stehenden Flächen befinden, die sich in der Achse des Schafts schneiden, wobei eine der Achsen über die Rahmendrehachse und über die Schaftachse verläuft, dass der Schaft parallel zur Rahmenachse angeordnet ist und dass die Rahmenachse mit jedem Drehflügel durch ein mechanisches Getriebe verbunden ist, das den Drehflügel synchron mit und umgekehrt zu der Rahmendrehung dreht.

Diese Merkmale der Erfindung gewährleisten die Drehung jedes Drehflügels synchron mit der Bewegung gemäß dem Umkreis in die entgegengesetzte Richtung um den Schaft mit einer Winkelgeschwindigkeit, die der Winkelgeschwindigkeit der Bewegung gemäß dem Umkreis gleich ist, wodurch eine fortschreitende bzw. translatorische Bewegung (ohne Drehung) des Drehflügels gegen die Luft erzeugt und eine gleichmäßige Verteilung der aerodynamischen Kräfte auf der aerodynamischen Oberfläche des Drehflügels gewährleistet wird, die zu einem höheren Wirkungsgrad der Auftriebskraft führt.

Die Ausführung von Schwingungen durch jeden Drehflügel, und zwar synchron mit seiner Drehung um die Achsen des Kreuzstücks des Kardangelenks, sichert gleichzeitig mit der Erzeugung der Auftriebskraft auch die Erzeugung des horizontalen Zugvortriebs.

Im aerodynamischen Hub- und Zugvortriebsaggregat kann die aerodynamische Oberfläche jedes Drehflügels um die Achsen gewunden sein, die zu den Achsen des Kreuzstücks des Kardangelenks parallel liegen und die über die aerodynamische Fläche verlaufen, wodurch ein Moment erzeugt wird, das zu den Schwingungen des Drehflügels beiträgt und die Kraft vermindert, die für die Schwingungen der Drehflügel aufgewandt wird; damit wird die Leistung vermindert, die für die Schwingungen aufgewandt werden, und der Wirkungsgrad bei der Erzeugung der Auftriebskraft und der Zugvortriebskraft erhöht.

Die Anzahl der Drehflügel wird nach dem Versuchs- und Berechnungsverfahren ausgewählt und geht von der Bedingung der Erzeugung der erforderlichen Auftriebskraft aus.

Die Erfindung wird nun anhand von Ausführungsbeispielen näher erläutert. Es zeigen:

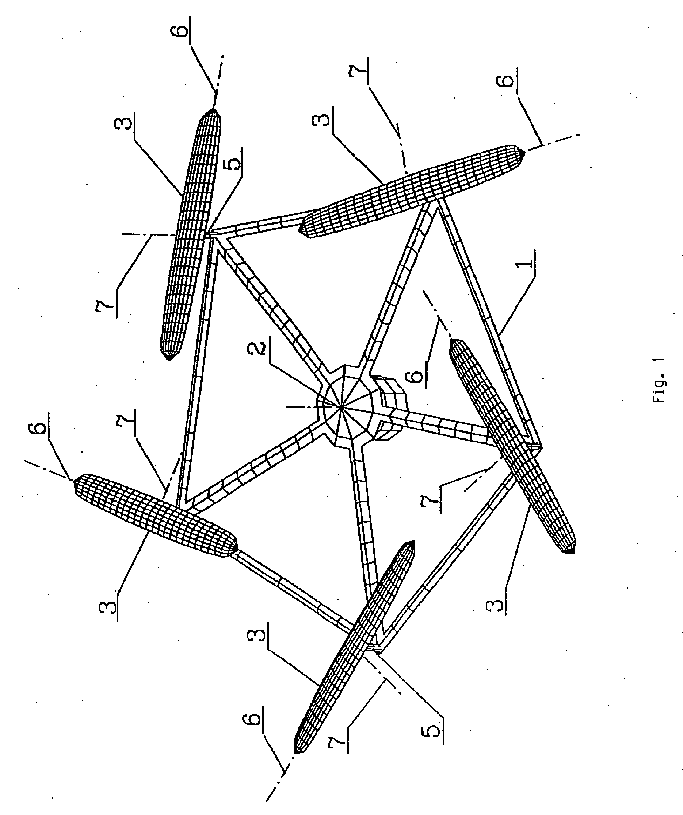

- Fig. 1: eine Draufsicht auf ein aerodynamisches Hub- und Zugvortriebsaggre- gat,

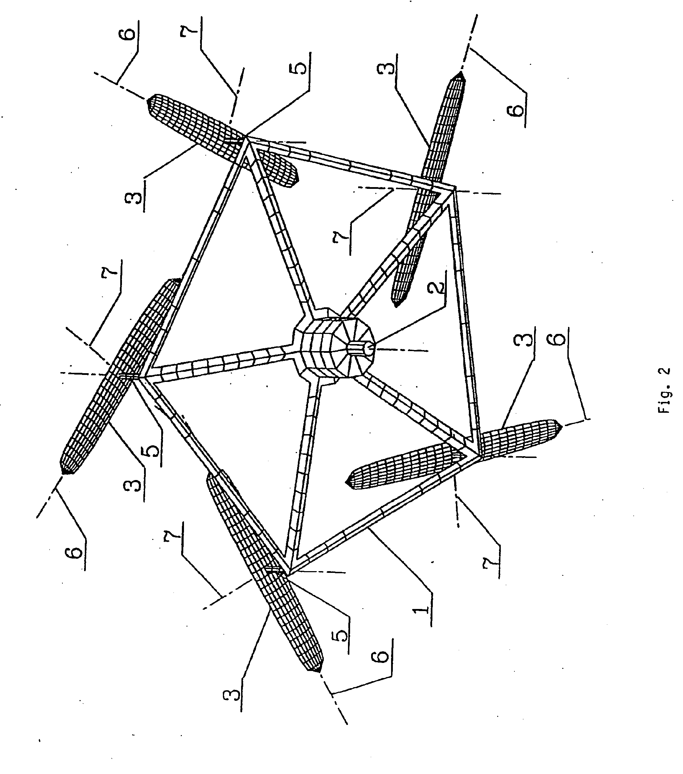

- Fig. 2: eine Ansicht des aerodynamischen Hub- und Zugvortriebsaggregats der Fig. 1 von unten,
- Fig. 3: ein Schema des mechanischen Antriebs, der die Drehung der mit einer aerodynamischen Oberfläche versehenen Drehflügel sichert,
- Fig. 4: eine Draufsicht auf einen Drehflügel mit einer gewundenen, aerodyna- mischen Oberfläche und
- Fig. 5: eine Seitenansicht der Platte in Fig. 4.

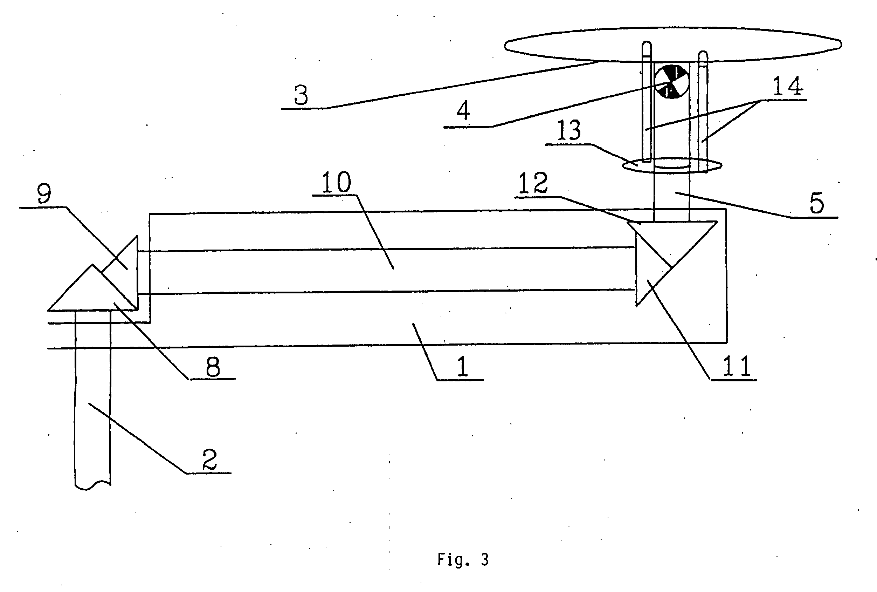

Das aerodynamische Hub- und Zugvortriebsaggregat umfasst einen Rahmen 1 mit einer Achse 2, um die sich der Rahmen 1 drehen kann. Der nicht gezeigte Drehantrieb des Rahmens 1 um die Achse 2 kann als Motor ausgeführt werden, der in Richtung der Achse 2 angeordnet ist und an dessen Motorwelle ein Sternrad befestigt werden kann. Auf dem Rahmen 1 ist an einer anderen befestigten Achse ein zweites Sternrad befestigt. Die beiden Sternräder sind mit einer Antriebskette verbunden. Es sind mindestens zwei Drehflügel 3 mit aerodynamischen Oberflächen vorhanden. Jeder Drehflügel 3 ist an einem Kardangelenk 4 (Fig. 3) derart befestigt, dass er synchron mit der Drehung des Rahmens 1 Schwingungen ausführen kann. Das Kardangelenk 4 ist an einem Schaft 5 befestigt, der auf dem Rahmen 1 angebracht ist. Der Schaft 5 ist parallel zur Achse 2 angeordnet. Achsen 6 und 7 eines Kreuzstücks des Kardangelenks 4 stehen senkrecht zueinander und liegen jeweils in zwei zueinander parallelen Flächen, die sich in der Achse des Schafts 5 schneiden, wobei eine der Achsen über die Drehachse 2 und die Achse des Schafts 5 verläuft.

Die Achse 2 ist mit jedem Drehflügel 3 durch einen mechanischen Antrieb verbunden, der auf dem Rahmen 1 angeordnet ist und der eine Drehung des Drehflügels 3 gemeinsam mit dem Schaft 5 synchron und umgekehrt zur Drehung des Rahmens 1 veranlassen kann.

An der Achse 2 ist ein Kegelzahnrad 8 (Fig. 3) befestigt, das mit einem zweiten Kegelzahnrad 9 verzahnt ist, das an einem Ende einer im Rahmen 1 angeordneten Radialwelle 10 befestigt ist. Am anderen Ende der Radialwelle 10 ist ein drittes Kegelzahnrad 11 befestigt, das mit einem vierten Kegelzahnrad 12 verzahnt ist, das am unteren Ende des Schafts 5 befestigt ist. Die Kegelzahnräder 8, 9 und 11, 12 sind gleich ausgebildet.

Die Schwingungen des Flügels 3 erfolgen mittels eines Kopiermechanismus, der aus einer profilierten Scheibe 13, die am Schaft 5 befestigt ist, an dem der Flügel 3 am Kardangelenk 4 angeordnet ist, und aus vertikalen Rollo-Schiebern 14 besteht, die über die profilierte Scheibe 13 gleiten und mit dem Drehflügel 3 zusammenwirken.

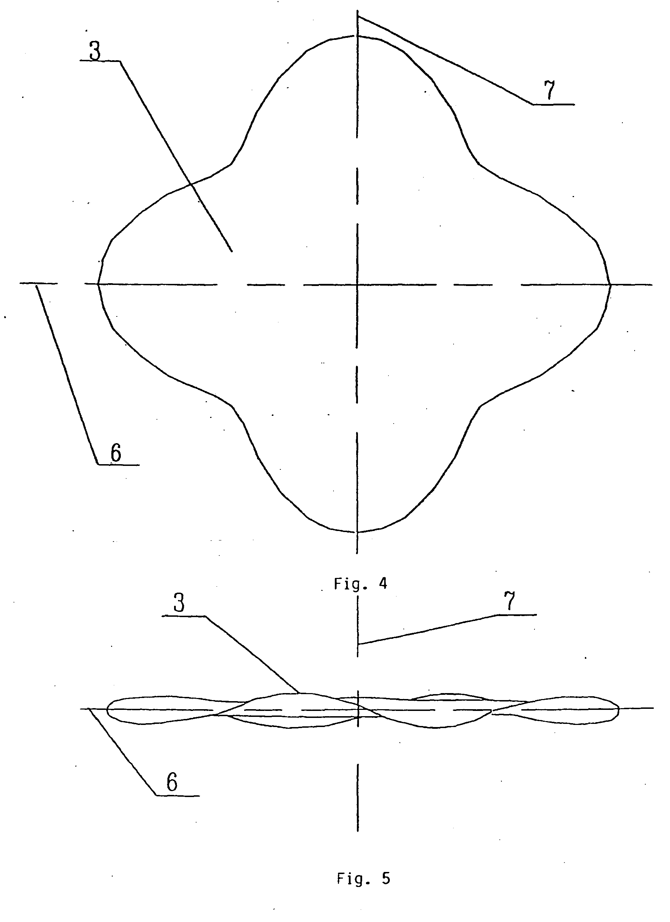

Jeder Drehflügel 3 (Figuren 4 und 5) kann gegenüber den Achsen gewunden sein, die parallel zu den Achsen 6 und 7 des Kreuzstücks des Kardangelenks 4 liegen und die über die Drehflügel 3 verlaufen, wodurch ein Moment erzeugt wird, das zu den Schwingungen des Drehflügels 3 beiträgt und diejenige Kraft vermindert, die für diese Schwingungen aufgewandt wird. Damit wird diejenige Leistung vermindert, die für die Schwingungen aufgewandt werden muss.

Das Aggregat arbeitet folgendermaßen:
Der Rahmen 1 mit den die aerodynamischen Oberflächen aufweisenden Drehflügeln 3 dreht sich um die Achse 2 mittels des zur Drehung des Rahmens 1 dienenden Antriebs mit Sternen und der Antriebskette. Gleichzeitig bewegt sich jeder Drehflügel 3 neben der Drehung des Rahmens 1 gemäß dem Umkreis um die Achse auf dem Rahmen 1 herum; dabei dreht sich jeder Drehflügel 3 synchron mit der Bewegung gemäß dem Umkreis gemeinsam mit dem Schaft 5 in die der Drehung des Rahmens entgegengesetzte Richtung mit einer Winkelgeschwindigkeit, die der Winkelgeschwindigkeit der Bewegung gemäß dem Umkreis mittels des mechanischen Antriebs gleich ist. Weil sich die Drehflügel 3 fortschreitend bewegen, ist die durch sie erzeugte Auftriebskraft gleichmäßig verteilt, wodurch ein hoher energetischer Wirkungsgrad des Aggregats gewährleistet ist. Damit wird eine fortschreitende bzw. translatorische Bewegung der Drehflügel 3 ohne die Drehung um die Achse 2 erreicht.

Jeder Flügel 3 führt synchron mit der Bewegung auch Schwingungen um die zwei senkrecht zueinander stehenden Achsen 6 und 7 infolge der Drehung des Schafts 5 und der profilierten Scheibe 13 aus, über die die vertikalen Rollo-Schieber 14 gleiten und die die Flügel 3 in bestimmten Winkeln in Bewegung setzen, so dass ein horizontaler Zugvortrieb gleichzeitig mit der Auftriebskraft erzeugt wird, wobei die Verteilung der Luftkraft auf die aerodynamischen Oberflächen der Drehflügel 3 gleichmäßig bleibt.

Das aerodynamische Hub- und Zugvortriebsaggregat ermöglicht so einen Flug des Fluggeräts mit hoher energetischer Wirksamkeit.

## Patentansprüche

1. Aerodynamisches Hub- und Zugvortriebsaggregat mit um eine Achse (2) umlaufenden aerodynamischen Flächen (3),
**dadurch gekennzeichnet,**
**dass** die aerodynamischen Flächen (3) innerhalb der von den aerodynamischen Flächen (3) gebildeten, normal zu der Achse (2) verlaufenden Ebene ausschließlich translatorische Bewegungen ausführen.

2. Aerodynamisches Hub- und Zugvortriebsaggregat nach Anspruch 1,
**dadurch gekennzeichnet,**
**dass** die aerodynamischen Flächen (3) jeweils um zwei einander senkrecht kreuzende, innerhalb einer normal zu der Achse (2) verlaufenden Ebene liegende Schwenkachsen (6, 7) schwenkbar angeordnet sind.

3. Aerodynamisches Hub- und Zugvortriebsaggregat nach Anspruch 1 oder 2,
**dadurch gekennzeichnet,**
**dass** die um die Achse (2) umlaufenden aerodynamischen Flächen (3) jeweils um eine parallel zu der Achse (2) und jeweils durch die beiden Schwenkachsen (6, 7) verlaufende Drehachse (5) drehbar gelagert sind, um welche Drehachse (5) sie sich jeweils mit der selben Winkelgeschwindigkeit, mit der ihr Umlauf um die Achse (2) erfolgt, entgegen der Umlaufrichtung drehen.

4. Aerodynamisches Hub- und Zugvortriebsaggregat nach einem der Ansprüche 1 bis 3,
**dadurch gekennzeichnet,**
**dass** es einen Rahmen (1) mit einer Achse (2) umfasst, um die sich der Rahmen (1) dreht, dass auf diesem Rahmen (1) mindestens zwei mit aerodynamischen Oberflächen versehene Drehflügel (3) drehbar angeordnet sind, dass jeder Drehflügel (3) an einem Kardangelenk (4) befestigt ist und synchron mit der Drehung des Rahmens (1) schwingen kann, dass das Kardangelenk (4) an einem Schaft (5) befestigt ist, der auf dem Rahmen (1) angeordnet ist, dass die Achsen (6, 7) eines Kreuzstücks des Kardangelenks (4) zueinander senkrecht stehen und sich jeweils in zwei senkrecht zueinander stehenden Flächen befinden, die sich in der Achse des Schafts (5) schneiden, wobei eine der Achsen (6, 7) über die Rahmendrehachse (2) und über die Schaftachse verläuft, dass der Schaft (5) parallel zur Rahmenachse (2) angeordnet ist und dass die Rahmenachse (2) mit jedem Drehflügel (3) durch ein mechanisches Getriebe verbunden ist, das den Drehflügel (3) synchron mit und umgekehrt zu der Rahmendrehung dreht.

5. Aerodynamisches Hub- und Zugvortriebsaggregat nach Anspruch 4,
**dadurch gekennzeichnet,**
**dass** das mechanische Getriebe ein auf der Achse (2) stehend angeordnetes erstes Zahnrad (8), ein mit dem Schaft verbundenes zweites Zahnrad (12) mit identischer Zähnezahl wie das erste Zahnrad (8), sowie ein das erste (8) und das zweite Zahnrad (12) direkt miteinander verbindendes Verbindungselement (9, 10, 11) umfasst.

6. Aerodynamisches Hub- und Zugvortriebsaggregat nach einem der Ansprüche 2 bis 5,
**dadurch gekennzeichnet,**
**dass** die Amplitude der Schwenkbewegungen sowie die Lage des oder der Abschnitte, in denen die Schwenkbewegungen der aerodynamischen Flächen (3) synchron zu ihrem Umlauf um die Achse (2) stattfinden, steuerbar ist.

7. Aerodynamisches Hub- und Zugvortriebsaggregat nach einem der vorhergehenden Ansprüche,
**dadurch gekennzeichnet,**
**dass** jeder Drehflügel (3) um die Achsen gewunden ist, die parallel zu den Achsen des Kreuzstücks und über die aerodynamischen Oberfläche des Drehflügels (3) verlaufen.

8. Aerodynamisches Hub- und Zugvortriebsaggregat nach einem der Ansprüche 1 bis 6,
**dadurch gekennzeichnet,**
**dass** die aerodynamischen Flächen (3) jeweils als mittig auf dem Schaft (5) gelagerte, schlanke Tragflächen ausgebildet sind.

9. Aerodynamisches Hubaggregat nach einem der Ansprüche 3 bis 8,
**dadurch gekennzeichnet,**
**dass** die Arme des Rahmens (1) aerodynamisch profiliert sind.

## Claims

1. An aerodynamic lifting and traction propulsion assembly, having aerodynamic faces (3) revolving about an axis (2),
**characterized in that**
the aerodynamic faces (3) execute solely translational motions inside the plane formed by the aerodynamic faces (3) and extending normally to the axis (2).

2. The aerodynamic lifting and traction propulsion assembly as defined by claim 1,
**characterized in that**
the aerodynamic faces (3) are each disposed pivotably about two pivot axes (6, 7), intersecting one another and located inside a plane extending normally to the axis (2).

3. The aerodynamic lifting and traction propulsion assembly as defined by claim 1 or 2,
**characterized in that**
the aerodynamic faces (3) revolving about the axis (2) are each rotatably supported about a rotary shaft (5) extending parallel to the axis (2) and through each of the two pivot axes (6, 7), about which rotary shaft (5) the faces each rotate counter to the direction of revolution, at the same angular speed at which their revolution about the axis (2) is effected.

4. The aerodynamic lifting and traction propulsion assembly as defined by one of claims 1 through 3,
**characterized in that**
it includes a frame (1) with an axis (2) about which the frame (1) rotates; that on this frame (1), at least two rotors (3) provided with aerodynamic surfaces are disposed rotatably; that each rotor (3) is secured to a cardan joint (4) and can oscillate synchronously with the rotation of the frame (1); that the cardan joint (4) is secured to a shaft (5) which is disposed on the frame (1); that the axes (6, 7) of a crosspiece of the cardan joint (4) are perpendicular to one another and are each located in two faces that are perpendicular to one another and intersect in the axis of the shaft (5), one of the axes (6, 7) extending via the rotary axis (2) of the frame and via the shaft axis; that the shaft (5) is disposed parallel to the frame axis (2); and that the frame axis (2) is connected to each rotor (3) by a mechanical gear which rotates the rotor (3) synchronously with and conversely to the frame rotation.

5. The aerodynamic lifting and traction propulsion assembly as defined by claim 4,
**characterized in that**
the mechanical gear includes a first gear wheel (8), disposed upright on the axis (2), a second gear wheel (12), connected to the shaft and having the identical number of teeth as the first gear wheel (8), and a connecting element (9, 10, 11) connecting the first gear wheel (8) and the second gear wheel (12) directly to one another.

6. The aerodynamic lifting and traction propulsion assembly as defined by one of claims 2 through 5,
**characterized in that**
the amplitude of the pivoting motions and the location of the portion or portions in which the pivoting motions of the aerodynamic faces (3) take place synchronously to their revolution about the axis (2) are controllable.

7. The aerodynamic lifting and traction propulsion assembly as defined by one of the foregoing claims,
**characterized in that**
each rotor (3) is wound about the axes which extend parallel to the axes of the crosspiece and via the aerodynamic surface of the rotor (3).

8. The aerodynamic lifting and traction propulsion assembly as defined by one of claims 1 through 6,
**characterized in that**
the aerodynamic faces (3) are each embodied as slender load-bearing faces supported centrally on the shaft (5).

9. The aerodynamic lifting assembly as defined by one of claims 3 through 8,
**characterized in that**
the arms of the frame (1) are aerodynamically profiled.

## Revendications

1. Groupe aérodynamique de propulsion et de poussée ascensionnelle, muni de surfaces aérodynamiques (3) en révolution autour d'un axe (2),
**caractérisé par le fait**
**que** les surfaces aérodynamiques (3) accomplissent exclusivement des mouvements translatoires à l'intérieur du plan formé par lesdites surfaces aérodynamiques (3) et s'étendant perpendiculairement audit axe (2).

2. Groupe aérodynamique de propulsion et de poussée ascensionnelle selon la revendication 1,
**caractérisé par le fait**
**que** les surfaces aérodynamiques (3) sont respectivement disposées, de manière pivotante, autour de deux axes de pivotement (6, 7) qui s'entrecroisent perpendiculairement et sont situés à l'intérieur d'un plan s'étendant perpendiculairement à l'axe (2).

3. Groupe aérodynamique de propulsion et de poussée ascensionnelle selon la revendication 1 ou 2,
**caractérisé par le fait**
**que** les surfaces aérodynamiques (3), en révolution autour de l'axe (2), sont respectivement montées rotatives autour d'un axe de rotation (5) qui s'étend parallèlement audit axe (2) et passe, à chaque fois, par les deux axes de pivotement (6, 7), axe de rotation (5) autour duquel lesdites surfaces tournent respectivement, en sens inverse du sens de révolution, à la même vitesse angulaire que celle à laquelle leur révolution s'opère autour dudit axe (2).

4. Groupe aérodynamique de propulsion et de poussée ascensionnelle selon l'une des revendications 1 à 3,
**caractérisé par le fait**
**qu'**il comprend un châssis (1) pourvu d'un axe (2) autour duquel ledit châssis (1) tourne ; par le fait qu'au moins deux ailes rotatives (3), dotées de surfaces aérodynamiques, sont disposées sur ce châssis (1) avec faculté de rotation ; par le fait que chaque aile rotative (3) est fixée à une articulation (4) à la Cardan, et peut osciller en synchronisme avec la rotation dudit châssis (1) ; par le fait que ladite articulation (4) à la Cardan est fixée à un arbre (5) situé sur ledit châssis (1) ; par le fait que les axes (6, 7) d'un croisillon de ladite articulation (4) à la Cardan sont perpendiculaires l'un à l'autre et se trouvent, à chaque fois, dans deux surfaces mutuellement perpendiculaires à intersection suivant l'axe dudit arbre (5), l'un desdits axes (6, 7) s'étendant au-dessus de l'axe (2) de rotation dudit châssis et au-dessus de l'axe dudit arbre ; par le fait que ledit arbre (5) est disposé parallèlement audit axe (2) du châssis ; et par le fait que ledit axe (2) du châssis est relié à chaque aile rotative (3) par l'intermédiaire d'une transmission mécanique faisant tourner ladite aile rotative (3) en synchronisme avec la rotation dudit châssis, et en sens inverse de cette dernière.

5. Groupe aérodynamique de propulsion et de poussée ascensionnelle selon la revendication 4,
**caractérisé par le fait**
**que** la transmission mécanique comprend une première roue dentée (8) assujettie à l'axe (2), une seconde roue dentée (12) reliée à l'arbre et offrant un nombre de dents identique à celui de ladite première roue dentée (8), ainsi qu'un élément de liaison (9, 10, 11) reliant directement, l'une à l'autre, lesdites première (8) et seconde (12) roues dentées.

6. Groupe aérodynamique de propulsion et de poussée ascensionnelle selon l'une des revendications 2 à 5,
**caractérisé par**
la faculté de commander l'amplitude des mouvements pivotants, ainsi que la position du ou des tronçon(s) sur le(s)quel(s) les mouvements pivotants des surfaces aérodynamiques (3) s'opèrent en synchronisme avec leur révolution autour de l'axe (2).

7. Groupe aérodynamique de propulsion et de poussée ascensionnelle selon l'une des revendications précédentes,
**caractérisé par le fait**
**que** chaque aile rotative (3) est déjetée autour des axes s'étendant parallèlement aux axes du croisillon, et au-dessus de la surface aérodynamique de ladite aile rotative (3).

8. Groupe aérodynamique de propulsion et de poussée ascensionnelle selon l'une des revendications 1 à 6,
**caractérisé par le fait**
**que** les surfaces aérodynamiques (3) sont respectivement réalisées sous la forme de surfaces portantes de configuration élancée, montées centralement sur l'arbre (5).

9. Groupe aérodynamique de propulsion et de poussée ascensionnelle selon l'une des revendications 3 à 8,
**caractérisé par le fait**
**que** les bras du châssis (1) présentent un profilage aérodynamique.
